# EUROPEAN PATENT APPLICATION

(11) **EP 1 655 964 A2**
(43) Date of publication of application: **10.05.2006**
(21) Application number: 06075043.7
(22) Date of filing: 04.05.1999
(51) Int. Cl.: H04N 7/24

(54) **Method for displaying devices in network**

(30) Priority: 06.05.1998 KR 9816140
(62) Divisional of application: 99303481.8
(71) Applicant: Samsung Electronics Co., Ltd., Suwon-si, Gyeonggi-Do (KR)
(72) Inventor: Woo, Sung-gab, Seoul (KR)
(74) Representative: Clark, David James

(57) **Abstract**

A method for displaying devices in a network is provided. A method for displaying the operations of devices on a display screen of a device which operates as a client in a network when various digital devices connected to the network operate as the client or the servers, having the same protocol layer as an Internet protocol stack on the upper network communication layer includes the steps of (a) the device which operates as the client requesting the remaining devices which operate as the servers to send characteristic information that they have, (b) displaying the representative information of the server device on the device which operates as the client when the representative information in which information representing a concerned device is implied is transmitted from the devices which operate as the servers to the device which operates as the client, (c) the device which operates as the client requesting the remaining devices which operate as the servers to send the multimedia information during the operations executed by the server devices, and (d) the device which operates as the client receiving each multimedia information from the devices which operate as the servers and displaying the image of the multimedia information where the representative information of the concerned device is positioned.

## Description

The present invention relates to a network, and more particularly, to a method for displaying devices in a network by which a user can see the operations of devices connected to the network through a device among the devices.

Recently, various digital devices such as a digital TV (DTV) , a digital VCR (DVCR) , and a digital set top box have appeared. The network in which the digital devices are connected to each other, thus performing communication is highlighted (please refer documents such as IEEE 1394-1995 High Performance Serial Bus, IEC 61883).

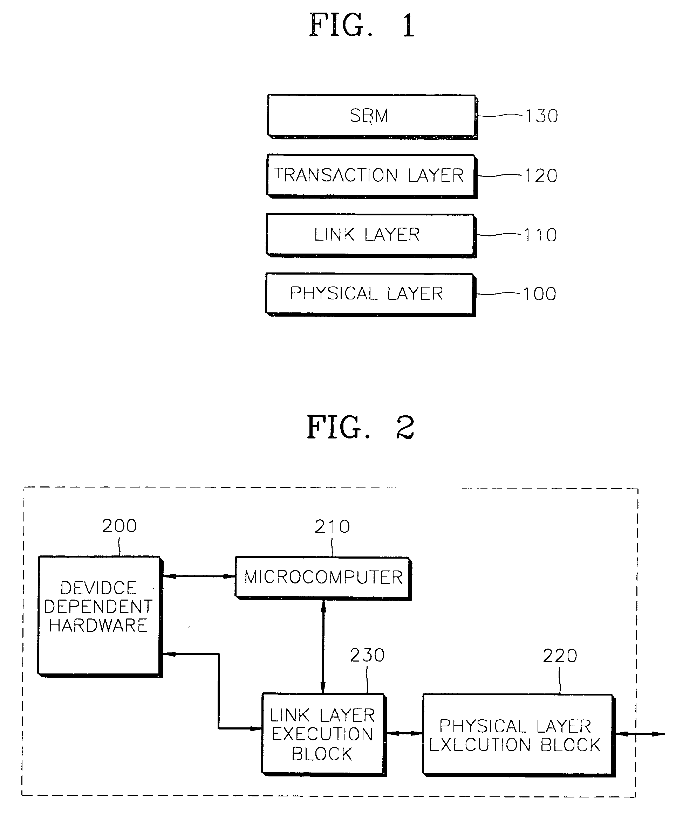

Figure 1 shows a protocol stack of a network device (1394 device). A general protocol stack which the respective devices adopting a network communication function is comprised of a physical layer 100 which is the lowest layer 100, a link layer 110, a transaction layer 120, and a serial bus management layer 130 which is the upper most layer. The physical layer 100 receives a bit column from the link layer 110 during transmission, obtains the right to use a serial bus, encodes the bit column, converts the bit column into an electrical signal, and transfers the signal to an external bus. Reverse processes are performed during reception. The link layer 110 deals with data in units of a packet and has functions of constructing and dismantling a packet, detecting errors, and managing a bus cycle. In general, the physical layer 100 and the link layer 110 are comprised of a chipset. The transaction layer 120 provides a transaction such as reading/writing/locking of data and performs asynchronous communication with different devices (or nodes) put on the network bus using the service provided by the lowest layer. A serial bus management layer 130 holds various material structures such as a configuration ROM and a control and status register (CSR) and manages a connection structure of an entire system connected to a power supply and a bus (topology) / speed map. The transaction layer 120 and the serial bus management layer 130 are formed of software and is realized by being built-in the microcomputer of the respective devices.

Figure 2 shows a block diagram of a digital device having the network communication function. The digital device is comprised of a device dependent hardware 200, a microcomputer 210, a physical layer execution block 220, and a link layer execution block 230. The device dependent hardware 200 executes a characteristic function of a concerned device. The microcomputer 210 for supporting the network communication executes the operation including the transaction layer and the serial bus management layer, described in Figure 1. The physical layer execution block 220 is hardware for realizing the function of the physical layer 100 of Figure 1. The link layer execution block 230 is hardware for realizing the CIP header inserting/removing functions of IEC 61883.

In a conventional technology, various digital devices are connected to each other on the network as mentioned above and transmits and receives data. However, a user cannot see the operations of all the devices at one sight.

With a view to solve or reduce the above problem, it is an aim of embodiments of the present invention to provide a method for displaying devices in a network by which a user can see the operations of the devices on the network on a screen of one device and control them.

According to a first aspect of the invention, there is provided a method for displaying the operations of devices on a display screen of a device which operates as a client in a network when various digital devices connected to the network operate as the client or the servers, having the same protocol layer as an Internet protocol stack on the upper network communication layer, comprising the steps of (a) the device which operates as the client requesting the remaining devices which operate as the servers to send characteristic information that they have, (b) displaying the representative information of the server device on the device which operates as the client when the representative information in which information representing a concerned device is implied is transmitted from the devices which operate as the servers to the device which operates as the client, (c) the device which operates as the client requesting the remaining devices which operate as the servers to send the multimedia information during the operations executed by the server devices, and (d) the device which operates as the client receiving each multimedia information from the devices which operate as the servers and displaying the image of the multimedia information where the representative information of the concerned device is positioned.

The representative information is preferably icon image information by which it is possible to classify the server devices.

The colour of the icons preferably vary according to whether the devices operate or not in the step (b).

The flickers of the icons preferably vary according to whether the devices operate or not in the step (b).

Preferably, the representative information of the device which operates as the client is further displayed in the step (b).

The step (d) may comprise the steps of: the device which operates as the client receiving image data in parallel from the devices which operate as the servers; the device which operates as the client decoding the received image data in parallel; and the device which operates as the client displaying the decoded image data in the position of the representative image of a concerned device on the screen thereof.

The step (d) may comprise the steps of: the device which operates as the client sequentially receiving the image data of the devices which operate as the servers in every predetermined period and decoding the image data; and the device which operates as the client displaying the decoded image data in the position of the representative image of a concerned device on the screen thereof.

The step (d) may comprise the steps of: the device which operates as the client sequentially receiving and decoding each I frame of the image data of the devices which operate as the servers; and displaying the decoded image data in the position of the representative information of a concerned device on the screen of the device which operates as the client.

The step (d) may comprise the steps of: the device which operates as the client receiving the image data of the devices which operate as the servers; the device which operates as the client decoding the image data received from the devices which operate as the servers by an AVI format data in order to express the image data as a moving image; and displaying the decoded data in the position of the representative information of the concerned device on the screen of the device which operates as the client.

The step (d) may comprise the steps of: the device which operates as the client receiving and decoding only one I frame of each device among the image data of the devices which operate as the servers; and displaying the decoded image data in the position of the representative information of a concerned device on the screen of the device which operates as the client.

The network is preferably an IEEE 1394 network.

According to a second aspect of the invention, there is provided a method for displaying the operations of devices on a display screen of a device which operates as a client in a network when various digital devices connected to the network operate as the client or the servers, having the same protocol layer as an Internet protocol stack on the upper network communication layer, comprising the steps of (a) the device which operates as the client requesting the remaining devices which operate as the servers to send characteristic information that they have, (b) displaying the representative information of the server device on the device which operates as the client when the representative information in which information representing a concerned device is implied is transmitted from the devices which operate as the servers to the device which operates as the client, (c) a user selecting the representative information of a predetermined device with the representative information of each device which operates as a server is displayed on the screen of the device which operates as the client, (d) the device which operates as the client requesting the selected device to send operation data, (e) the device which operates as the client receiving multimedia data from the selected device which operates as the server and decoding the received signal according to a predetermined method, and (f) displaying the decoded signal in the position of the representative information of a concerned device on the screen of the device which operates as the client.

The representative information may be icon image information for classifying the server device.

For a better understanding of the invention, and to show how embodiments of the same may be carried into effect, reference will now be made, by way of example, to the accompanying diagrammatic drawings, in which:
Figure 1 shows a protocol stack of a network device (1394 device);
Figure 2 shows a block diagram of a digital device having a network communication function;
Figure 3 is an example of the structure of the network for describing embodiments of the present invention;
Figure 4 shows the network protocol stack of Figure 3;
Figure 5 is a flowchart of a method for displaying devices in the network according to embodiments of the present invention;
Figure 6 is a block flowchart showing processes in which information received from server devices is decoded in a digital TV in the description of Figure 5;
Figures 7A through 7E are block diagrams describing various processes in which operation data of the server devices are input to the digital TV and are displayed in Figure 5; and
Figure 8 is another embodiment of the method for displaying devices in the network of the present invention.

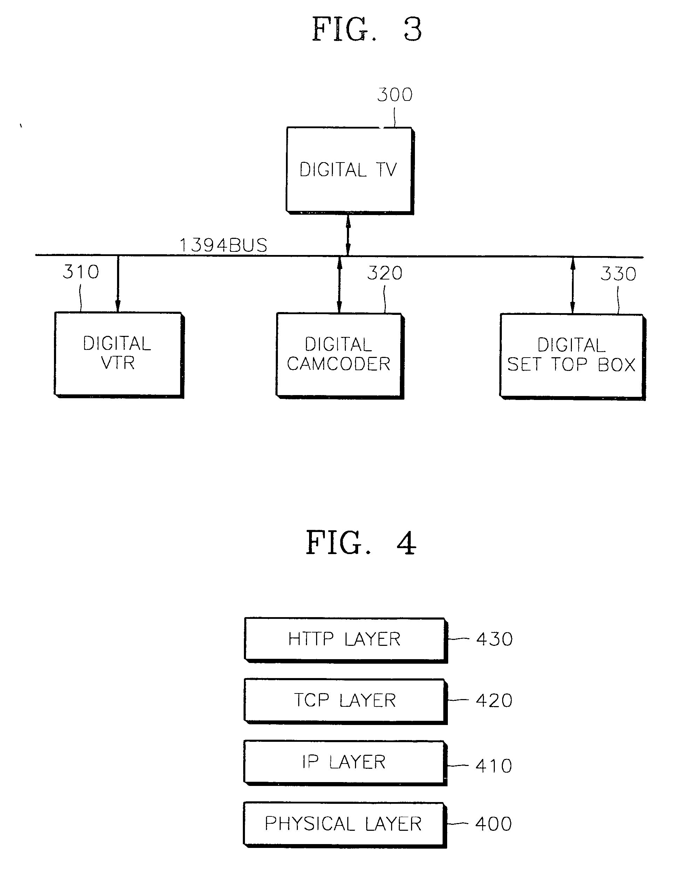

Figure 3 is an example of the structure of a network for describing the present invention. A digital TV 300, a digital VCR 310, a digital camcorder 320, and a digital set top box 330 are connected to a network bus. The respective digital devices 300 through 330 execute data communication according to a client/server method used in a general intranet/Internet, including a protocol layer as shown in Figure 4. Here, the digital TV 300 by which a user can see predetermined image and character data on a screen operates as a client and includes a web browser. The digital devices 310 through 330 play the same role as that of a web server on the Internet. The devices connected to the network bus give and take hypertext documented data as in the Internet. The hypertext document to be transferred by the respective devices include information on the functions and the operations of the respective devices. The digital TV 300 which is the client accesses the respective web sites from the web server devices 310 through 330 using the web browser and controls concerned devices. Namely, a user accesses the web sites of the remaining devices connected to the network using the web browser of the digital TV 300 and controls the characteristic operations of the concerned devices in the respective web sites. The characteristic operations of the respective devices and predetermined device information are included in the web sites provided by the digital devices 300 through 330 connected to the network.

Figure 4 shows the network protocol layer of Figure 3, which is comprised of a network physical layer 400, an IP layer 410, a transmission control protocol (TCP) layer 420, and hypertext transmission protocol (HTTP) layer 430. The network physical layer 400 is a layer for transmitting and receiving data through a network bus. In the IP layer 410, a protocol for connecting independently managed communication networks to each other is adopted in order to use the communication networks together. In the TCP layer 420, a communication net protocol of a system connected through the Internet is adopted. In the HTTP layer 430, a communication protocol used for exchanging the hypertext document in the Internet is adopted.

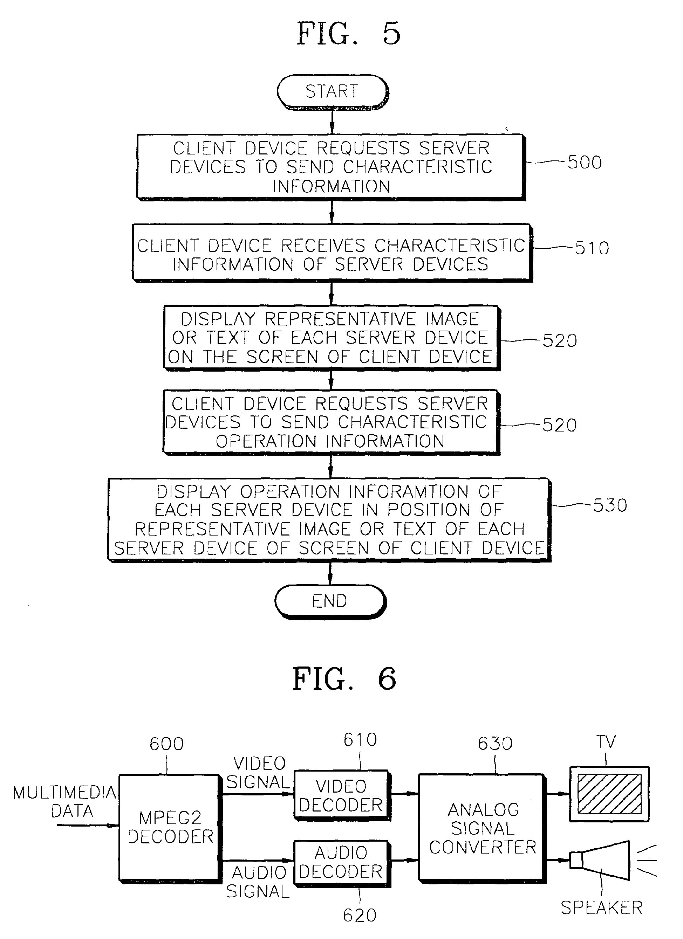

Figure 5 is a flowchart of a method for displaying devices in the network of the present invention, which will be described, taking the system of Figure 3 as an example. First, the digital TV 300 which is the client device requests the digital VCR 310, the digital camcorder 320, and the digital set top box 330, which are server devices, to send predetermined characteristic information that they have (step 500). The above-mentioned server devices accept this request and sends the characteristic information which they have such as kinds of products and manufacture, to the digital TV 300 which is the client (step 510). The pattern of the characteristic information is shown as a picture in which information for classifying products is implied, namely, is representative information (icon information or text information) which represents a concerned device. The digital TV 300 receives characteristic information from the server devices and displays the representative information received from the respective server devices and the representative information thereof at predetermined positions of a screen (step 520). The digital TV 300 requests the server devices 310 through 330 to transfer information during the execution of the respective characteristic operations (such as reproduced screen information during a digital VTR 310 reproducing operation) (step 530). The operation information received from the server devices is multimedia information such as a video signal or an audio signal. The digital TV 300 displays the multimedia information where the representative information of the concerned device is displayed (step 540).

Figure 6 is a block diagram showing processes in which the information received from the server devices is decoded by the digital TV 300 in the explanation of Figure 5. Since data which the digital devices deal with is generally MPEG2 data, processes of decoding the data are executed by an MPEG2 decoder 600. When the multimedia data are input from the server devices, the MPEG2 decoder 600 decodes data and separately extracts the video signal and the audio signal. The video signal and the audio signal extracted by the MPEG2 decoder 600 are respectively input to a video decoder 610 and an audio decoder 620, are decoded, and are converted into analog signals through an analog signal converter 630. The video analog signal is output through the screen of the digital TV 300. The audio analog signal is output through a speaker loaded into the digital TV 300. Accordingly, a user can see the operations of different devices which are connected to each other through the screen of the digital TV 300 or the speaker.

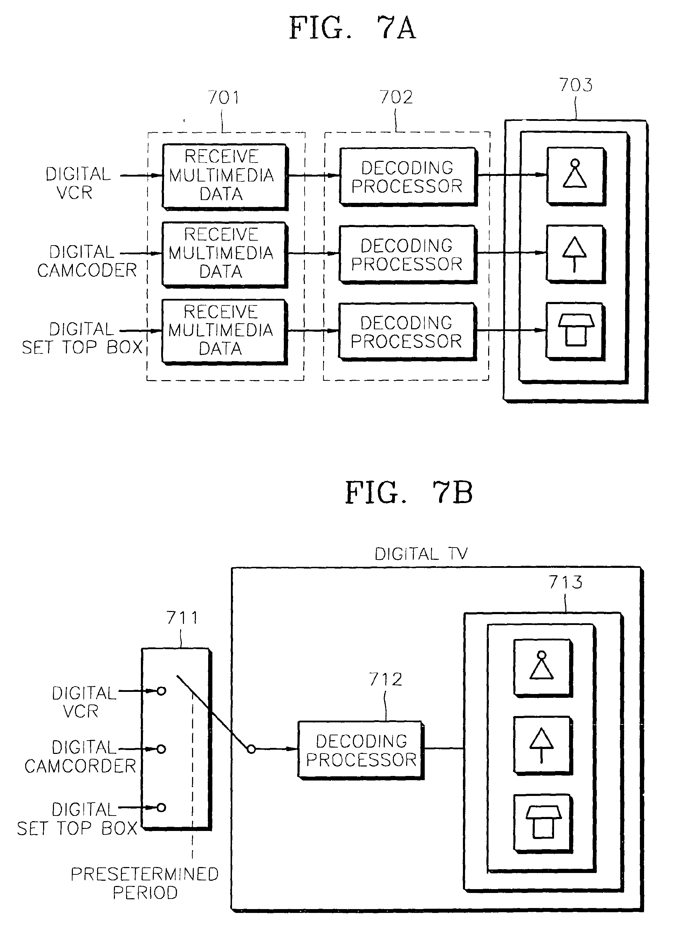

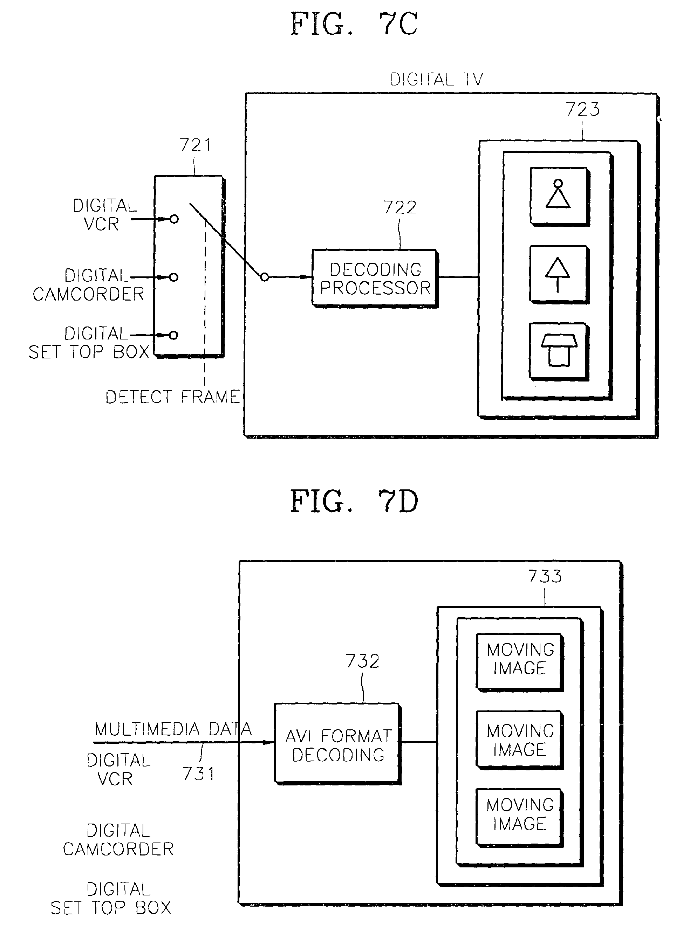

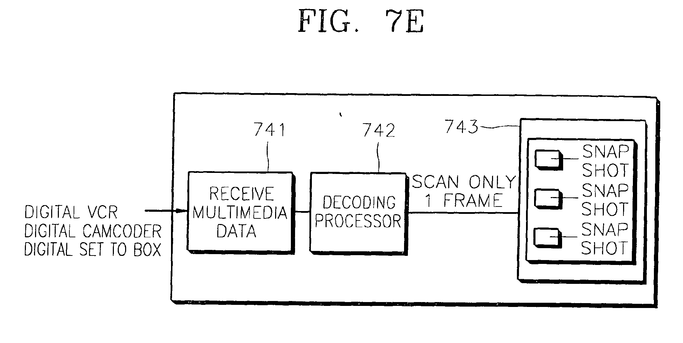

Figures 7A through 7E are block diagrams of embodiments of various processes in which the operation data of the server devices are input to the digital TV 300 and are displayed in Figure 5. In the embodiment of Figure 7A, the multimedia data from the server devices are received by the digital TV 300 in parallel (step 701). The digital TV 300 decodes the received parallel data through decoding processors as shown in Figure 6 (step 702). The video signal is displayed where the concerned device representative information positioned on the screen of the digital TV 300 (step 703). In the embodiment of Figure 7B, the multimedia data of the server devices are sequentially input to the digital TV 300 in every predetermined period (step 711). The digital TV 300 decodes the data received through one decoding processor as shown in Figure 6 (step 712) and displays the decoded data where the concerned device representative information is positioned on the screen of the digital TV 300 (step 713). In the embodiment of Figure 7C, the multimedia data of the server devices are sequentially input to the digital TV 300 (step 721). The digital TV 300 decodes the received data through one decoding processor (step 722). I frames of the respective devices are sensed and sequentially decoded. For example, I frames among the video signals of the digital VCR 310 is read and decoded. Continuously, I frames among the video signals of the digital camcorder 320 are read and decoded. Also, I frames among the video signals of the digital set top box 330 is read and decoded. The decoded video signal is displayed in the position of the representative image of the concerned device which is displayed on the screen of the digital TV 300 (step 723). Only I frame of the operation screen of each device displayed on the screen of the digital TV 300 is displayed. Accordingly, an image of a snap shot pattern changes in every predetermined period. In the embodiment of Figure 7D, the multimedia data of the server devices are selectively or periodically received by the digital TV 300 (step 731). The digital TV 300 decodes the received data by an audio video interleaved (AVI) format used for expressing the received data as a moving image (step 732). The data decoded by the AVI format is scanned on the screen of the digital TV 300 and is displayed in the position of the representative information of the concerned device. The picture displayed as mentioned above is shown as the moving image to the user. Such a moving image display is commonly used in a general web browser. In the embodiment of Figure 7E, the digital TV 300 receives the multimedia data from the server devices (step 741), decodes the received signal through the decoding processor as shown in Figure 6 (step 742), and displays only one I frame from each decoded device signal in the position of the representative information of the concerned device on the screen of the digital TV 300 (step 743). The picture displayed as mentioned above is shown to the user as a still picture of the snap shot pattern.

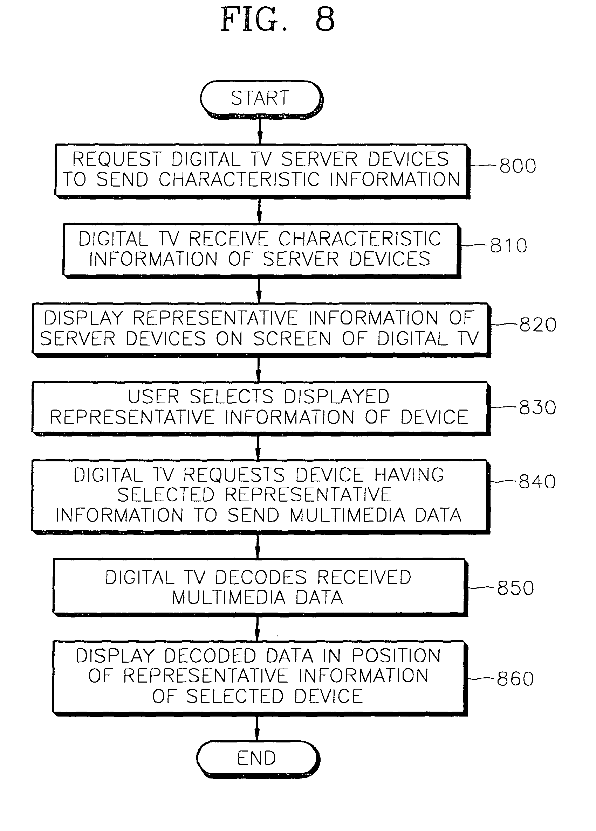

Figure 8 is another embodiment of a method for displaying devices in the network of the present invention, which will be described taking Figure 3 as an example. Descriptions of steps 800 through 820 will be omitted since they are identical to those of the steps 500 to 520 of Figure 5. After the representative information of the respective devices are displayed on the screen of the digital TV 300 (the step 820), the representative information of a predetermined device is selected by the user (step 830). When the user selects the representative information of an icon or a text pattern, the digital TV 300 requests the operation data to the device having selected representative information (step 840). Here, the operation data refer to the multimedia information such as a reproduced image and a sound signal when the digital VCR 310 executes the reproducing operation when the digital VCR 310 is selected. The digital TV 300 receives the multimedia information from the selected device during the concerned operation and decodes the multimedia information according to a predetermined device (step 850). The digital TV 300 displays the decoded signal where the representative information of the concerned server device is positioned on the screen thereof (step 860). In such a process, only when the user selects one device among the server devices displayed on the screen of the digital TV 300, the operation data are received from the selected device and displayed.

Here, the network can perform communication by a client/server method like the IEEE 1394 network. The above-mentioned embodiment of the present invention can be embodied in a program which can be executed in a computer. The embodiment can be realized in a generally used digital computer for operating the program from a medium used in the computer. The medium includes a storage medium such as a magnetic storage medium (FOD and HOD), optical storage medium (CD-ROM and DVD) or a carrier wave (transferred through the Internet).

The recording medium stores a program code which can execute a first step in which the device which operates as the client requests the remaining devices which operate as servers to send characteristic information that they have, a second step in which the representative information of the server devices is displayed on the screen of the device which operates as the client when the representative information in which the information representing a concerned device is implied is transmitted from the devices which operate as servers to the device which operates as the client, a third step in which the device which operates as the client requests the devices which operates as the servers to send the multimedia information during the operations of the server devices, and a fourth step in which the device which operates as the client receives each multimedia information from the devices which operate as the servers and displays the image of the multimedia information where the representative information of the concerned device is positioned, in the network system having the protocol stack of Figure 4. The program is positioned in an upper layer as it prevents more errors of the video data. The upper layer and the lower layer have backward compatibility in which the upper layer includes the lower layer. The program is coded so that more errors are prevented with respect to data which considerably affects picture quality.

A functional program, a code, and a code segment for realizing the present invention can be easily realized by programmers knowledgeable in the art.

According to the present invention, the user can see the operations of the devices on the network on the screen of one device among the devices and can easily control a desired device on the screen.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for displaying the operations of devices on a display screen of a device which operates as a client in a network when various digital devices connected to the network operate as the client or the servers, having the same protocol layer as an Internet protocol stack on the upper network communication layer, comprising the steps of:
(a) the device which operates as the client requesting the remaining devices which operate as the servers to send characteristic information that they have;
(b) displaying the representative information of the server device on the device which operates as the client when the representative information in which information representing a concerned device is implied is transmitted from the devices which operate as the servers to the device which operates as the client;
(c) the device which operates as the client requesting the remaining devices which operate as the servers to send the multimedia information during the operations executed by the server devices; and
(d) the device which operates as the client receiving each multimedia information from the devices which operate as the servers and displaying the image of the multimedia information where the representative information of the concerned device is positioned; wherein the step (d) comprises the steps of:
the device which operates as the client receiving image data in parallel from the devices which operate as the servers;
the device which operates as the client decoding the received image data in parallel; and
the device which operates as the client displaying the decoded image data in the position of the representative image of a concerned device on the screen thereof.

2. The method of claim 1, wherein the representative information is icon image information by which it is possible to classify the server devices.

3. The method of claim 2, wherein the colours of the icons vary according to whether the devices operate or not in the step (b).

4. The method of claim 2, wherein the flickers of the icons vary according to whether the devices operate or not in the step (b).

5. The method of any preceding claim, wherein the representative information of the device which operates as the client is further displayed in the step (b).

6. The method of any of the preceding claims, wherein the network is an IEEE 1394 network.

7. A method for displaying the operations of devices on a display screen of a device which operates as a client in a network when various digital devices connected to the network operate as the client or the servers, having the same protocol layer as an Internet protocol stack on the upper network communication layer, comprising the steps of:
(a) the device which operates as the client requesting the remaining devices which operate as the servers to send characteristic information that they have;
(b) displaying the representative information of the server device on the device which operates as the client when the representative information in which information representing a concerned device is implied is transmitted from the devices which operate as the servers to the device which operates as the client;
(c) a user selecting the representative information of a predetermined device with the representative information of each device which operates as a server is displayed on the screen of the device which operates as the client;
(d) the device which operates as the client requesting the selected device to send operation data;
(e) the device which operates as the client receiving multimedia data from the selected device which operates as the server and decoding the received signal according to a predetermined method; and
(f) displaying the decoded signal in the position of the representative information of a concerned device on the screen of the device which operates as the client.

8. The method of claim 7, wherein the representative information is icon image information for classifying the server device.
